# EUROPÄISCHE PATENTSCHRIFT

(11) **EP 0 891 898 B1**
(45) Veröffentlichungstag und Bekanntmachung des Hinweises auf die Patenterteilung: **06.11.2002**
(21) Anmeldenummer: 98109150.7
(22) Anmeldetag: 20.05.1998
(51) Int. Cl.: B60R 21/00, B60N 2/00, B60R 21/32

(54) **Verfahren und Vorrichtung zum Erfassen verschiedener Parameter einer auf einer Unterlage sitzenden Person**
Method and apparatus for recording various parameters of a person seat on a support
Méthode et appareillage d' enregistrement de différents paramètres d' une personne assise sur un support

(30) Priorität: 18.07.1997 LU 90106
(43) Veröffentlichungstag der Anmeldung: 20.01.1999
(73) Patentinhaber: I.E.E. International Electronics & Engineering S.à.r.l., L-2632 Luxembourg (LU)
(72) Erfinder: Billen, Karl, 54675 Körperich (DE); Federspiel, Laurent, 7392 Asselscheuer (LU); Serban, Bodgan, 4610 Niederkorn (LU); Theiss, Edgard, 4720 Kelmis (BE)
(74) Vertreter: Freylinger, Ernest T.

(56) Entgegenhaltungen:
- WO-A-97/10115
- DE-A- 4 212 018
- FR-A- 2 744 548
- GB-A- 2 225 660
- US-A- 4 958 851
- US-A- 5 474 327

## Beschreibung

Die vorliegende Erfindung betrifft ein Verfahren und eine Vorrichtung zum Erfassen verschiedener Parameter einer auf einer Unterlage sitzenden Person. Bei den erfaßten Parametern handelt es sich z.B. um die Größe und/oder das Gewicht der Person, oder um die Position der Person bezüglich der Unterlage. Ein solches Verfahren bzw. eine solche Vorrichtung findet seine bzw. ihre Anwendung insbesondere im Automobilbereich bei der Steuerung eines Passagierrückhaltesystems, wie z.B. eines Airbags.

Um bei einem Verkehrsunfall die Verletzungsrisiken für die Fahrzeuginsassen zu senken, werden moderne Fahrzeuge immer häufiger mit einem aktiven Passagierrückhaltesystem ausgestattet. Ein solches aktives Passagierrückhaltesystem umfaßt im allgemeinen einen oder mehrere Airbags, die bei einem Aufprall des Fahrzeugs blitzschnell aufgeblasen werden und die die von dem Passagier bei dem Aufprall freigegebene Energie aufnehmen sollen, sowie gegebenenfalls Gurtstraffer o.ä..

Es ist klar, daß ein derartiges Passagierrückhaltesystem um so effektiver arbeiten kann, je genauer es auf die spezifischen Eigenschaften des jeweiligen Passagiers abgestimmt ist, d.h. auf seine Größe und/oder sein Gewicht bzw. seine momentane Sitzposition. Man hat aus diesem Grund mikroprozessorgesteuerte Rückhaltesysteme mit die mehrere Betriebsmoden entwickelt, die eine Anpassung verschiedener Auslöseparameter des Rückhaltesystems in Abhängigkeit der Statur des Passagiers bzw. seiner Position auf dem Fahrzeugsitz ermöglichen, wie z.B. der Aufblaszeitpunkt, die Aufblasgeschwindigkeit und/oder das Aufblasvolumen des Airbags.

Damit eine solche Anpassung der Auslöseparameter des Rückhaltesystems durch den Mikroprozessor ermöglicht wird, muß dieser natürlich mit verschiedenen, die Statur und/oder Sitzposition des jeweiligen Passagiers betreffenden Parametern versorgt werden. Ein derartiges Passagierrückhaltesystem muß folglich mit einer Vorrichtung zum Ermitteln ebendieser Parameter ausgerüstet sein.

In dem US Patent US-A-5,232,243 wird zu diesem Zweck eine Vorrichtung zur Gewichtserkennung eines Passagiers vorgestellt, die mehrere einzelne Kraftsensoren aufweist, wobei die einzelnen Kraftsensoren matritzenförmig in der Sitzfläche des Fahrzeugsitzes angeordnet sind. Bei den Kraftsensoren handelt es sich um Foliendrucksensoren mit druckabhängigem elektrischen Widerstand, die unter dem Namen FSR (force sensing resistor) bekannt sind. Durch individuelles Messen der elektrischen Widerstände der einzelnen Foliendrucksensoren, werden die auf die einzelnen Sensoren wirkenden Einzelkräfte ermittelt. Die Summe dieser Einzelkräfte ergibt dann einen Wert für die auf die Vorrichtung ausgeübte Gesamtkraft, d.h. für das Gewicht des Passagiers. Ein solches Verfahren wird ebenfalls in der DE-A-42 12 018 dem Oberbegriff des Anspruchs 1 bzw. 6 entsprechend beschrieben.

Bei dieser Meßmethode liegt jedoch eine Abhängigkeit der gemessenen Gesamtkraft von den Eigenschaften des Polstermaterials des Fahrzeugsitzes vor, die ihrerseits sehr temperaturabhängig sind. So weist dieses Polstermaterial bei sehr tiefen Umgebungstemperaturen allgemein eine sehr hohe Steifigkeit auf, weswegen die von den einzelnen Foliendrucksensoren gemessenen Kräfte bei tiefen Temperaturen deutlich kleiner sind als die tatsächlich durch den Passagier ausgeübten Kräfte. Andererseits dehnt sich das Polstermaterial bei sehr hohen Umgebungstemperaturen aus und übt dadurch eine zusätzliche Kraft auf die einzelnen Kraftsensoren aus, so daß die gemessenen Einzelkräfte in diesem Fall deutlich über den tatsächlich durch den Passagier ausgeübten Kräften liegen. Der gemessene Wert der Gesamtkraft ist demgemäß stark abhängig von Umgebungseinflüssen, weshalb eine solche Detektionsvorrichtung den hohen Anforderungen an ein modernes Passagierrückhaltesystem nicht genügen kann.

Aufgabe der vorliegenden Erfindung ist es folglich ganz allgemein, ein Verfahren zum Erfassen verschiedener Parameter einer auf einer Unterlage sitzenden Person vorzuschlagen, das weitestgehend unabhängig von Umgebungseinflüssen wie z.B. der Umgebungstemperatur ist. Eine weitere Aufgabe besteht darin, eine Vorrichtung zum Erfassen verschiedener Parameter nach diesem Verfahren vorzuschlagen.

Diese Aufgabe wird erfindungsgemäß gelöst durch ein Verfahren zum Erfassen verschiedener Parameter einer auf einer Unterlage sitzenden Person, das die folgenden Schritte umfaßt:
Ermitteln der Ausdehnung der von der Person auf der Unterlage belegten Auflagefläche, und
Ermitteln der verschiedenen Parameter anhand der Ausdehnung der belegten Auflagefläche unter Berücksichtigung statistischer Korrelationsfunktionen zwischen der Ausdehnung der Auflagefläche und dem jeweiligen Parameter. Mit dieser Methode wird folglich nicht mehr die von dem Passagier auf den Fahrzeugsitz ausgeübte Gewichtskraft gemessen, sondern es wird deren Wirkungsfläche auf dem Sitz ermittelt. Diese Wirkungsfläche läßt sich mit geeigneten Detektoren weitestgehend unabhängig von den äußeren Einflüssen, wie z.B. die Umgebungstemperatur ermitteln, da hierzu keine absoluten Werte für die von dem Passagier ausgeübte Gewichtskraft gemessen werden müssen.

Neben der weitgehenden Unabhängigkeit von der Umgebungstemperatur, zeichnet sich das erfindungsgemäße Verfahren auch durch eine weitgehende Unabhängigkeit von der Haltung des Passagiers auf dem Fahrzeugsitz aus. Dies ist bei dem in der US-A-5,232,243 beschriebenen Verfahren mittels direkter Gewichtsmessung nicht der Fall. Bei dieser direkten Meßmethode ist nämlich zu bedenken, daß nicht das gesamte Körpergewicht des Passagiers auf die Sitzfläche des Fahrzeugsitzes wirkt, da ein Teil des Gewichtes über die Beine des Passagiers direkt auf den Fahrzeugboden und ein weiterer Anteil des Gewichtes auf die Rückenlehne des Sitzes wirkt. Dabei verändert sich das Verhältnis zwischen den auf die verschiedenen Flächen wirkenden Gewichtsanteile je nach Haltung des Passagiers auf dem Fahrzeugsitz. So vergrößert sich z.B. der von den Beinen getragene Anteil der Gewichtskraft wenn sich der Passagier nach vorne lehnt, während bei zurückgelehntem Passagier die Rückenlehne des Sitzes stärker belastet wird. In beiden Fällen nimmt demgemäß der auf die beschriebene Vorrichtung ausgeübte Anteil der Gewichtskraft ab, so daß die gemessene Gesamtkraft stark abhängig von der Haltung des Passagiers auf dem Sitz ist.

Da die Änderung der Haltung des Passagiers auf dem Fahrzeugsitz keine wesentliche Veränderung der belegten Auflagefläche hervorruft, ist die Ermittlung der verschiedenen Parameter nach dem erfindungsgemäßen Verfahren weitestgehend von der Haltung des Passagiers unabhängig. Eine zuverlässige Ermittlung der relevanten Parameter ist daher auch bei sehr unterschiedlichen Sitzbedingungen des Passagiers möglich.

Nach der Ermittlung der belegten Auflagefläche können anhand der Ausdehnung, der Form, der Orientierung bzw. der Position der ermittelten Wirkungsfläche die verschiedenen für das Rückhaltesystem relevanten Parameter des Passagiers ermittelt werden. Dazu werden die genannten Größen der Auflagefläche z.B. anhand statistischer Korrelationsfunktionen in die benötigten Parameter des Passagiers umgerechnet.

In einer Ausgestaltung des Verfahrens kann der ermittelte Parameter eine Gewichts- bzw. Größenklasse der Person umfassen. Hierbei ist klar, daß eine Bestimmung der Parameter unter Benutzung eines Modells des Menschen keine exakten Werte für die z.B. das Gewicht oder die Größe des Passagiers liefern kann. In Anbetracht der begrenzten Zahl (z.B. 3) verschiedener Betriebsmoden des Passagierrückhaltesystems, sind die Anforderungen an die absolute Genauigkeit des ermittelten Gewichts bzw. der ermittelten Größe eher zweitrangig. Es genügt im Endeffekt, die verschiedenen Passagiere einer begrenzten Anzahl von verschiedenen Klassen zuzuordnen und den der jeweiligen Klasse entsprechenden Betriebsmodus des Rückhaltesystems auszuwählen. In dem Beispiel mit drei verschiedenen Betriebsmoden des Rückhaltesystems bedeutet dies z.B., daß die Passagiere in drei verschiedene Klassen unterteilt werden müssen, die zusammen einen Bereich von 0 bis über 100 kg überdecken, d.h. daß jede der Klassen einen Bereich von etwa 30 kg abdecken muß. Es ist klar, daß bei einer solchen groben Unterteilung, die anhand des statistischen Modells ermittelten Werte eine genügend große Genauigkeit aufweisen.

In einer vorteilhaften Ausgestaltung des Verfahrens wird zusätzlich zur Ermittlung der Ausdehnung der belegten Auflagefläche die Position der belegten Auflagefläche bezüglich der Unterlage ermittelt, wobei aus der ermittelten Position die Sitzposition der Person bezüglich der Unterlage ermittelt wird.

In einer Ausgestaltung kann die Ermittlung der belegten Auflagefläche z.B. die Ausdehnung der belegten Auflagefläche umfassen, wobei die Unterlage in eine Vielzahl von Sitzbereichen einer bestimmten Ausdehnung unterteilt und die Zahl der von der Person belegten Sitzbereiche ermittelt wird. Dabei kann die Unterlage vorteilhaft zusätzlich in verschiedene Zonen unterteilt werden, wobei jede Zone mehrere Sitzbereiche enthält, und die Zahl der belegten Sitzbereiche für jede Zone der Unterlage gesondert ermittelt werden. Anhand der Verteilung der belegten Sitzbereiche in den unterschiedlichen Zonen der Unterlage kann dann leicht die Sitzposition der Person bezüglich der Unterlage ermittelt werden.

Es ist anzumerken, daß anhand der Verteilung der verschiedenen belegten Sitzbereiche über die Unterlage ebenfalls die Form der belegten Auflagefläche bestimmt werden kann. Anhand der ermittelten Form der Auflagefläche kann bei genügend feinem lateralen Auflösungsvermögen des Belegungssensors entschieden werden, ob der Sitz durch eine Person oder durch einen Gegenstand belegt ist. In dem letzteren Fall kann der Airbag dann gegebenenfalls deaktiviert werden.

Eine Vorrichtung zum Erfassen verschiedener Parameter einer auf einer Unterlage sitzenden Person, umfaßt demgemäß eine Vorrichtung zum Ermitteln der Ausdehnung der von der Person auf der Unterlage belegten Auflagefläche. Die Vorrichtung zum Ermitteln der belegten Auflagefläche kann dabei zusätzlich eine Vorrichtung zum Ermitteln der Position der belegten Auflagefläche bezüglich der Unterlage umfassen.

In einer vorteilhaften Ausgestaltung der Vorrichtung umfaßt die Vorrichtung zum Ermitteln der Ausdehnung der Auflagefläche einen der Unterlage zugeordneten Belegungssensor. Der Belegungssensor weist bevorzugt eine Vielzahl von aktiven Bereichen auf, die derart räumlich über die Unterlage verteilt sind, daß die Unterlage meßtechnisch in eine Vielzahl von Sitzbereichen einer bestimmten Größe unterteilt wird, wobei jedem Sitzbereich jeweils ein aktiver Bereich des Belegungssensors zugeordnet ist. Durch die meßtechnische Unterteilung der Unterlage in eine Vielzahl von Sitzbereichen einer bestimmten Größe, läßt sich die Ermittlung der belegten Auflagefläche auf die Ermittlung der einzelnen belegten Sitzbereiche zurückführen. Durch genügend feine Unterteilung der Unterlage, d.h. durch eine genügend hohe Anzahl der aktiven Bereiche des Belegungssensors, läßt sich dabei quasi ein beliebig hohes Auflösungsvermögen erzielen. In der Praxis wird die Zahl der aktiven Bereiche einen Kompromiß zwischen notwendigem Auflösungsvermögen und niedrigen Herstellungskosten des Sensors darstellen.

Es ist anzumerken, daß der Belegungssensor sowohl auf der Unterlage angeordnet sein kann als auch unterhalb, z.B. bei einer nachgiebigen Unterlage, bzw. in diese integriert ist. Im ersten Fall sitzt die Person unmittelbar auf dem Belegungssensor auf, im zweiten Fall wird die Auflagekraft von der nachgiebigen Oberfläche der Unterlage auf den Belegungssensor übertragen.

Der Belegungssensor ist vorteilhaft in verschiedene Zonen unterteilt, wobei jede Zone mehrere aktive Bereiche des Belegungssensors enthält, und die aktiven Bereiche der verschiedenen Zonen des Belegungssensors gesondert auswertbar sind. Hierdurch kann die Zahl der belegten Sitzbereiche für die verschiedenen Zonen individuell ermittelt werden und anhand deren Verteilung die Sitzposition der Person bezüglich der Unterlage bestimmt werden.

In einer bevorzugten Ausgestaltung weist der Belegungssensor eine Vielzahl von Schaltelementen auf, wobei jedes Schaltelement einen aktiven Bereich des Belegungssensors ausbildet. Jedes Schaltelement ist dabei vorzugsweise derart ausgestaltet, daß es einen ersten Widerstandswert aufweist, wenn der dem entsprechenden aktiven Bereich zugeordnete Sitzbereich nicht belegt ist, d.h. wenn das Schaltelement nicht ausgelöst ist, und einen zweiten Widerstandswert aufweist, wenn der entsprechende Sitzbereich belegt ist, d.h. wenn das Schaltelement ausgelöst ist, wobei der erste Widerstandswert wesentlich größer ist als der zweite Widerstandswert. Dazu umfaßt es beispielsweise ein Widerstandselement mit einem endlichen elektrischen Widerstand und ein niederohmiges Auslöseelement, wobei das Auslöseelement dem Widerstandselement bei betätigtem Schaltelement parallelgeschaltet wird, so daß der Gesamtwiderstand des Schaltelementes wesentlich erniedrigt wird.

Diese Ausgestaltung der Schaltelemente mit einem endlichen und folglich meßbaren Widerstand im nicht-ausgelösten Zustand ermöglicht eine Kontrolle der Funktionsfähigkeit des Schaltelementes sowie der Integrität seiner Verschaltung durch eine einfache Widerstandsmessung. Eine solche Kontrolle ist bei herkömmlichen Schaltelementen, die im nicht-ausgelösten Zustand einen unendlich großen elektrischen Widerstand aufweisen, nicht möglich.

Darüber hinaus erlaubt es diese vorteilhafte Ausgestaltung der Schaltelemente, mehrere Schaltelemente des Belegungssensors in Serie zu schalten, so daß sie eine Widerstandskette ausbilden, die auch bei nicht belegten Schaltelementen einen meßbaren endlichen Widerstand aufweist. Der Gesamtwiderstand einer solchen Widerstandskette entspricht der Summe der Einzelwiderstände der individuellen Schaltelemente. Sind die ersten und zweiten Widerstandswerte der verschiedenen Schaltelemente jeweils identisch ändert sich der Gesamtwiderstand folglich im wesentlichen linear mit der Zahl der ausgelösten Schaltelemente, und stellt somit ein Maß für die Zahl der belegten Sitzbereiche dar.

Auf diese Weise kann die Zahl der zum Betreiben des Belegungssensors benötigten elektrischen Anschlüsse deutlich reduziert werden. In seiner einfachsten Ausgestaltung umfaßt ein derartig aufgebauter Belegungssensor lediglich eine einzige Widerstandskette, deren Schaltelemente über die gesamte Unterlage verteilt sind. Es werden folglich nur zwei Anschlüsse benötigt, über die einerseits der Gesamtwiderstand der Widerstandskette gemessen wird und andererseits die Integrität der Schaltelemente und der Verkabelung kontrolliert werden kann. Um den Belegungssensor in verschiedene Zonen zu unterteilen, kann man einen oder mehrere zusätzliche Anschlüsse jeweils zwischen zwei Schaltelementen vorsehen, so daß die Widerstandskette meßtechnisch in mehrere Teilketten unterteilt wird. An den zusätzlichen Anschlüssen kann dann der Widerstand der jeweiligen Teilkette abgegriffen und die belegte Auflagefläche in dem dieser Teilkette zugeordneten Bereich der Unterlage ermittelt werden. Die Kontrolle der Integrität des Belegungssensors kann weiterhin global über die gesamte Widerstandskette oder selektiv für die einzelnen Zonen durchgeführt werden.

In einer bevorzugten Ausgestaltung der Vorrichtung umfaßt jedes Schaltelement ein erstes Kontaktelement und ein zweites Kontaktelement, die in einem gewissen Abstand zueinander angeordnet sind und durch eine Schicht aus Widerstandsmaterial elektrisch miteinander kontaktiert sind. Ein niederohmiges Auslöseelement ist, bei nicht betätigtem Schaltelement, in einem gewissen Abstand zu den Kontaktelementen angeordnet und kontaktiert die beiden Kontaktelemente beim Betätigen des Schaltelementes elektrisch, wobei die elektrische Leitfähigkeit der Kontaktierung durch das Widerstandsmaterial wesentlich kleiner ist als die Leitfähigkeit der Kontaktierung durch das Betätigungselement. Hierbei sind die beiden Kontaktelemente und die Schicht aus Widerstandsmaterial vorzugsweise auf einer ersten Trägerfolie aufgebracht, während das Auslöseelement auf einer zweiten Trägerfolie aufgebracht ist, die der ersten Trägerfolie mittels Abstandhaltern beabstandet zugeordnet ist. Beim Betätigen des Schaltelementes werden die beiden Trägerfolien in dem aktiven Bereich zusammengedrückt und das niederohmige Auslöseelement mit den Kontaktelementen kontaktiert.

Als Widerstandsmaterial eignet sich nahezu jedes elektrisch leitfähige Material, das einen genügend hohen spezifischen elektrischen Widerstand aufweist, wie z.B. hochohmiger Graphit oder ein Halbleitermaterial wie es beispielsweise bei der Herstellung von Foliendrucksensoren verwendet wird. Das Auslöseelement dagegen weist bevorzugt ein elektrisch sehr gut leitendes Material auf, z.B. niederohmiger Graphit, oder ein Metall wie z.B. Silber, das bevorzugt gegen Oxidation beschichtet ist. Vorteilhaft sind Materialien, die sich auf die Trägerfolien aufdrucken lassen, z.B. mittels eines Siebdruckverfahrens, und die hierdurch eine sehr einfache Herstellung des Belegungssensors erlauben. Die Kombination der Materialien für die Widerstandsschicht und das Auslöseelement wird dabei vorzugsweise so gewählt, daß sich ein Widerstandsverhältnis V von ausgelöstem Schaltelement zu nicht-ausgelöstem Schaltelement ergibt, mit V ≤ 1/100. Ein weiterer Faktor bei der Wahl der geeigneten Materialien ist beispielsweise das Temperatur- bzw. Alterungsverhalten des Belegungssensors. Durch Verwendung von Materialien mit einem sehr geringen Temperaturkoeffizienten lassen sich Schaltelemente herstellen, deren Widerstandswerte im wesentlichen von der Umgebungstemperatur unabhängig sind. Alternativ dazu kann das Temperatur- bzw. Alterungsverhalten des Belegungssensors durch die Verwendung einer Kompensationsschaltung ausgeglichen werden. Mit Hilfe einer derartigen Kompensationsschaltung lassen sich überdies Produktionstoleranzen z.B. der Dicke der verschiedenen Schichten kompensieren.

Es ist anzumerken, daß die Kontaktierung der Kontaktelemente durch das Auslöseelement auch durch die Widerstandsschicht hindurch erfolgen kann, d.h. im wesentlichen senkrecht zu der Widerstandsschicht, wenn diese die Kontaktelemente z.B. vollständig überdeckt. In der Tat weist die Schicht aus Widerstandsmaterial im allgemeinen eine geringe Dicke auf, so daß in Verbindung mit relativ großen Kontaktierungsflächen, der bei der Kontaktierung wirksame elektrische Widerstand vernachlässigbar wird.

Ein kontrollierbares Schaltelement mit zwei Widerstandszuständen zum Aufbau eines Belegungssensors umfaßt ein erstes Kontaktelement und ein zweites Kontaktelement, die in einem gewissen Abstand zueinander angeordnet sind, und ein niederohmiges Auslöseelement, das die beiden Kontaktelemente beim Betätigen des Schaltelementes elektrisch kontaktiert. Das Schaltelement umfaßt ein Widerstandselement mit einem endlichen Widerstand, das elektrisch zwischen das erste und zweite Kontaktelement geschaltet ist, wobei die elektrische Leitfähigkeit der Kontaktierung durch das Widerstandselement wesentlich kleiner ist als die Leitfähigkeit der Kontaktierung durch das Auslöseelement. Das Widerstandselement umfaßt hierbei vorzugsweise eine Schicht aus Widerstandsmaterial, welche das erste und das zweite Kontaktelement elektrisch miteinander kontaktiert.

In einer bevorzugten Ausgestaltung umfaßt das Schaltelement eine erste Trägerfolie, auf der die beiden Kontaktelemente und das Widerstandselement angeordnet sind, eine zweite Trägerfolie, auf der das niederohmige Auslöseelement angeordnet ist, und einen Abstandhalter, der zwischen der ersten und der zweiten Trägerfolie angeordnet ist, so daß sich die Kontaktelemente und das Auslöseelement in einem bestimmten Abstand gegenüberstehen, wobei der Abstandhalter in dem Bereich der Kontaktelemente Ausschnitte aufweist, so daß die beiden Kontaktelemente beim Zusammendrücken der beiden Trägerfolien durch das Auslöseelement elektrisch kontaktiert werden.

Die erfindungsgemäße Vorrichtung zum Erkennen verschiedener Parameter findet ihre Verwendung beispielsweise bei der Steuerung eines Passagierrückhaltesystems in einem Fahrzeug, wobei der Fahrzeugsitz die Unterlage darstellt. In diesem Fall wird der eigentliche Sensor in den Fahrzeugsitz integriert und die erzeugten Signale werden der Steuerung des Passagierrückhaltesystems zugeführt. Die Steuerung wertet die erzeugten Signale aus und entscheidet je nach der ermittelten Größenklasse der Passagiers bzw. je nach seiner Position bezüglich des Fahrzeugsitzes über den bestmöglichen Betriebsmodus des Passagierrückhaltesystems.

Im folgenden wird nun eine besonders vorteilhafte Ausgestaltung der erfindungsgemäßen Vorrichtung anhand der beiliegenden Figuren beschrieben. Die Beschreibung beschränkt sich dabei im wesentlichen auf die Ausgestaltung des eigentlichen Sensors, da dessen Anordnung in dem Fahrzeugsitz bzw. dessen Verschaltung mit dem Steuergerät für das Passagierrückhaltesystem dem Fachmann bekannt sein sollte. Es zeigen:
- Fig.1:: eine erste Ausgestaltung einer Vorrichtung zum Erfassen verschiedener Parameter einer auf einer Unterlage sitzenden Person;
- Fig.2:: einen Schnitt durch ein Schaltelement mit zwei Widerstandszuständen zum Aufbau eines erfindungsgemäßen Belegungssensors;
- Fig.3:: ein Schaltsymbol für das Schaltelement der Fig. 2;
- Fig.4:: eine zweite Ausgestaltung einer Vorrichtung zum Erfassen verschiedener Parameter einer auf einer Unterlage sitzenden Person;
- Fig.5:: einen Schnitt durch ein Referenzbauteil zur Kompensierung des Temperatur- bzw. Alterungsverhaltens eines Schaltelementes nach Fig. 1;
- Fig.6:: ein Schaltsymbol für das Referenzbauteil nach Fig. 5;
- Fig.7:: eine erste Ausgestaltung einer Schaltung zur Temperatur- bzw. Alterungskompensierung;
- Fig.8:: eine zweite Ausgestaltung einer Schaltung zur Temperatur- bzw. Alterungskompensierung.

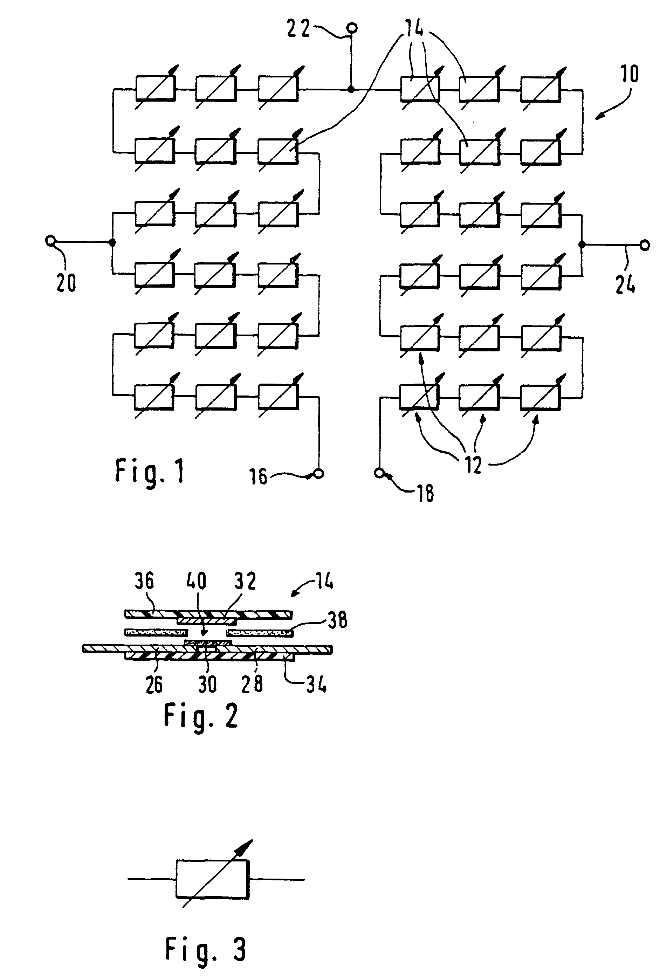

Die erfindungsgemäße Vorrichtung umfaßt im wesentlichen eine Vorrichtung zum Ermitteln der belegten Auflagefläche auf dem Fahrzeugsitz. Eine solche Vorrichtung ist in Fig. 1 dargestellt. Diese ist bevorzugt als Belegungssensor 10 ausgebildet, der durch bekannte Techniken, wie z.B. das Einschäumen, in die Polsterung eines Fahrzeugsitzes integriert werden kann. Der Belegungssensor 10 dient dazu, die von einem auf dem Fahrzeugsitz sitzenden Passagier belegte Sitzfläche zu ermitteln. Hierzu weist der Belegungssensor 10 eine Vielzahl aktiver Bereiche 12 auf, die im allgemeinen derart regelmäßig über der Sitzfläche verteilt werden, daß die Sitzfläche in eine Vielzahl nebeneinanderliegender Sitzbereiche einer bestimmten Größe unterteilt wird. Ist der Fahrzeugsitz mit einem Passagier belegt, werden die unterhalb der belegten Auflagefläche angeordneten aktiven Bereiche 12 des Belegungssensors 10 belastet und man kann durch Ermitteln der Zahl dieser belasteten aktiven Bereiche z.B. die Ausdehnung der belegten Auflagefläche bestimmen.

In der dargestellten Ausgestaltung weist der Belegungssensor 10 in jedem aktiven Bereich ein Schaltelement 14 auf, das bei Belegung des jeweiligen zugeordneten Sitzbereiches ausgelöst wird. Jedes Schaltelement 14 ist bevorzugt derart ausgestaltet, daß es zwei endliche Widerstandszustände aufweist, d.h. daß es einen ersten endlichen Widerstandswert aufweist, wenn das Schaltelement 14 nicht ausgelöst ist, und einen zweiten Widerstandswert, wenn das Schaltelement 14 ausgelöst ist, wobei der erste Widerstandswert wesentlich größer ist als der zweite Widerstandswert. Diese Ausgestaltung der Schaltelemente 14 mit einem endlichen und folglich meßbaren Widerstand im nicht-ausgelösten Zustand ermöglicht es, die Schaltelemente 14 des Belegungssensors 10 in Serie zu schalten, so daß sie eine Widerstandskette ausbilden, die auch bei nicht belegten Schaltelementen 14 einen meßbaren endlichen Widerstand aufweist. Sind die ersten und zweiten Widerstandswerte der verschiedenen Schaltelemente 14 jeweils identisch ändert sich der Gesamtwiderstand der Widerstandskette linear mit der Zahl der ausgelösten Schaltelemente 14, und stellt somit ein Maß für die Zahl der belegten Sitzbereiche dar.

Es ist anzumerken, daß erst die besondere Ausgestaltung der Schaltelemente 14 mit zwei endlichen Widerstandszuständen die Reihenschaltung der Schaltelemente erlaubt. Bei herkömmlichen in Reihe geschalteten Schaltelementen, die im nicht-ausgelösten Zustand einen unendlichen Widerstand aufweisen, ist der Stromkreis unterbrochen, sobald lediglich eines der Schaltelemente 14 nicht ausgelöst ist. In diesem Fall führt eine Messung der Gesamtwiderstandes der Reihenschaltung nicht zu dem erwünschten Ergebnis. Weiterhin ermöglicht der endliche Widerstand des nicht belegten Belegungssensors 10 zu unterscheiden, ob der Belegungssensor 10 unbelegt oder defekt ist. Bei unbelegten intakten Belegungssensor 10 weist die Reihenschaltung der Schaltelemente 14 einen bestimmten elektrischen Widerstand auf, der im wesentlichen der Summe der Widerstände der nicht ausgelösten Schaltelement 14 entspricht. Ist der Belegungssensor 10 jedoch defekt, z.B. durch eine Unterbrechung der Verkabelung der Schaltelemente 14 an einer Stelle, wird der gemessene Gesamtwiderstand der Widerstandskette unendlich, so daß dieser Zustand von der nachgeschalteten Auswerteschaltung eindeutig erkannt werden kann. Die Steuerung des Passagierrückhaltesystems wird dann beispielsweise in einen Standardmodus geschaltet und der Defekt des Belegungssensors 10 eventuell durch eine Leuchtdiode in Armaturenbrett des Fahrzeugs angezeigt.

Durch die Reihenschaltung der einzelnen Schaltelemente 14 reduziert sich vorteilhaft die Zahl der benötigten elektrischen Anschlüsse des Belegungssensors 10. In seiner einfachsten Ausgestaltung weist der Belegungssensor 10 lediglich zwei elektrische Anschlüsse 16 und 18 aus, über die einerseits der Gesamtwiderstand der Widerstandskette gemessen wird und andererseits die Integrität der Schaltelemente und der Verkabelung kontrolliert werden kann. Der in Fig. 1 dargestellte Belegungssensor 10 weist darüber hinaus drei weitere Anschlüsse 20, 22, 24 auf, die die Widerstandskette in vier Teilketten unterteilen, wobei jede Teilkette in einer Zone des Belegungssensors 10 lokalisiert ist. Der Belegungssensor 10 wird hierdurch meßtechnisch in vier Zonen unterteilt, in denen die belegte Auflagefläche durch Messen der Widerstände der jeweiligen Teilketten gesondert bestimmt werden kann. Dies ermöglicht es, die Verteilung der belegten Auflagefläche über die verschiedenen Zonen zu errechnen und somit die Position des Passagiers bezüglich des Fahrzeugsitzes zu bestimmen.

Es bleibt zu bemerken, daß die Unterteilung des Belegungssensors 10 in vier Zonen lediglich eine mögliche Ausgestaltung darstellt. Der Belegungssensor 10 kann durch Anbringen von beliebig vielen Anschlüssen in beliebig viele verschiedene Zonen unterteilt werden. Die Unterteilung kann dabei sowohl in Querrichtung als auch in Längsrichtung des Fahrzeugsitzes erfolgen, oder wie in dem dargestellten Fall in beiden Richtungen. Je feiner die Unterteilung des Fahrzeugsitzes dabei in einer Richtung ist, desto besser ist das Auflösungsvermögen in dieser Richtung, desto höher ist jedoch auch die Zahl der benötigten Anschlüsse. In der Praxis wird die Zahl der verschiedenen Zonen des Fahrzeugsitzes dabei einen Kompromiß zwischen ausreichendem Auflösungsvermögen und minimaler Anschlußanzahl darstellen.

In Fig. 2 ist ein vorteilhaftes Schaltelement 14 mit zwei Widerstandszuständen im Schnitt dargestellt. Es umfaßt im wesentlichen zwei Kontaktelemente 26 und 28, die in einem gewissen Abstand zueinander angeordnet sind. Die beiden Kontaktelemente 26 und 28 sind durch eine Schicht 30 aus einem Widerstandsmaterial, wie z.B. hochohmigem Graphit, miteinander kontaktiert. Diese Widerstandsschicht 30 bestimmt den Widerstand des nicht-ausgelösten Schaltelementes 14. Weiterhin umfaßt das Schaltelement 14 ein niederohmiges Auslöseelement 32, das bei nicht-ausgelöstem Schaltelement 14 in einem gewissen Abstand zu den beiden Kontaktelementen 26, 28 und der Widerstandsschicht 30 angeordnet ist. Das Auslöseelement 32 ist aus einem elektrisch gut leitendem Material wie z.B. niederohmigem Graphit, oder einem Metall wie z.B. Silber hergestellt, so daß sein elektrischer Widerstand deutlich kleiner ist als der Widerstand der Widerstandsschicht 30.

Beim Auslösen des Schaltelementes 14 wird das Auslöseelement 32 gegen die Widerstandsschicht 30 und die Kontaktelemente 26 und 28 gedrückt, wobei die beiden Kontaktelemente 26 und 28 durch das Auslöseelement 32 kontaktiert werden. Die Widerstandsschicht 30 wird folglich durch das Auslöseelement 32 überbrückt und der Widerstand des Schaltelementes deutlich herabsetzt. Es ist hierbei anzumerken, daß die Kontaktierung der Kontaktelemente 26 und 28 durch das Auslöseelement 32 nicht unbedingt direkt erfolgen muß, d.h. durch direkten Kontakt zwischen den Kontaktelementen und dem Auslöseelement, sondern daß die Kontaktierung auch durch die Widerstandsschicht 30 hindurch erfolgen kann, d.h. im wesentlichen senkrecht zu der Widerstandsschicht 30, wenn diese die Kontaktelemente 26, 28 z.B. vollständig überdeckt. In der Tat weist die Schicht aus Widerstandsmaterial 30 im allgemeinen eine geringe Dicke (z.B. d ≤ 25 µm) auf, so daß in Verbindung mit relativ großen Kontaktierungsflächen, der bei der Kontaktierung wirksame elektrische Widerstand vernachlässigbar wird.

Aufgrund seines speziellen Aufbaus, stellt das Schaltelement 14 im Prinzip ein Bauteil mit einem veränderlichen elektrischen Widerstand dar, wobei jedoch lediglich zwei diskrete Widerstandswerte angenommen werden. Hieraus erklärt sich die Verwendung des Schaltsymboles für einen variablen Widerstand (siehe Fig. 3).

Die jeweiligen Kontaktelemente 26, 28 und die Widerstandsschicht 30 aller Schaltelemente 14 des Belegungssensors 10 sind bevorzugt auf einer ersten Trägerfolie 34 des Belegungssensors 10 aufgebracht, während die jeweiligen Auslöseelemente 32 auf einer zweiten Trägerfolie 36 aufgebracht sind, die der ersten Trägerfolie 34 mit einem gewissen Abstand zugeordnet ist. Das Aufbringen der einzelnen Elemente auf die jeweiligen Trägerfolien erfolgt dabei vorzugsweise in einem Siebdruckverfahren, wobei in einer ersten Etappe die Verbindungsleitungen zwischen den Kontaktelementen 26, 28 gleichzeitig mit den Kontaktelementen aufgedruckt werden. Nach dem Aufdrucken der einzelnen Widerstandsschichten 30 auf die jeweiligen Kontaktelemente 26, 28 und dem Aufdrucken der Auslöseelemente 32 auf die zweite Trägerfolie 32, werden die beiden Trägerfolien 26, 28 mittels eines dazwischen angeordneten Abstandhalters 38 verklebt, so daß sie in einem geeigneten Abstand zueinander angeordnet sind. Der Abstandhalter 38 kann beispielsweise aus doppelseitiger Klebefolie hergestellt sein, wobei er in den Bereichen der eigentlichen Schaltelemente 14 jeweils eine Aussparung 40 aufweist.

Dieses Verfahren erlaubt es große Mengen erfindungsgemäßer Belegungssensoren 10 sehr kostengünstig herzustellen. In der Praxis kann ein Belegungssensor 10 dabei bis zu 100 oder mehr Schaltelemente 14 aufweisen, wobei beispielsweise jedes Schaltelement 14 im nicht ausgelösten Zustand einen Widerstand von etwa 1 kΩ bis 5 kΩ aufweist. Das Widerstandsverhältnis V von ausgelöstem Schaltelement zu nicht-ausgelöstem Schaltelement kann dabei je nach Wahl des Materials für das Auslöseelement 32 zwischen 1/1000 ≤ V ≤ 1/10 betragen.

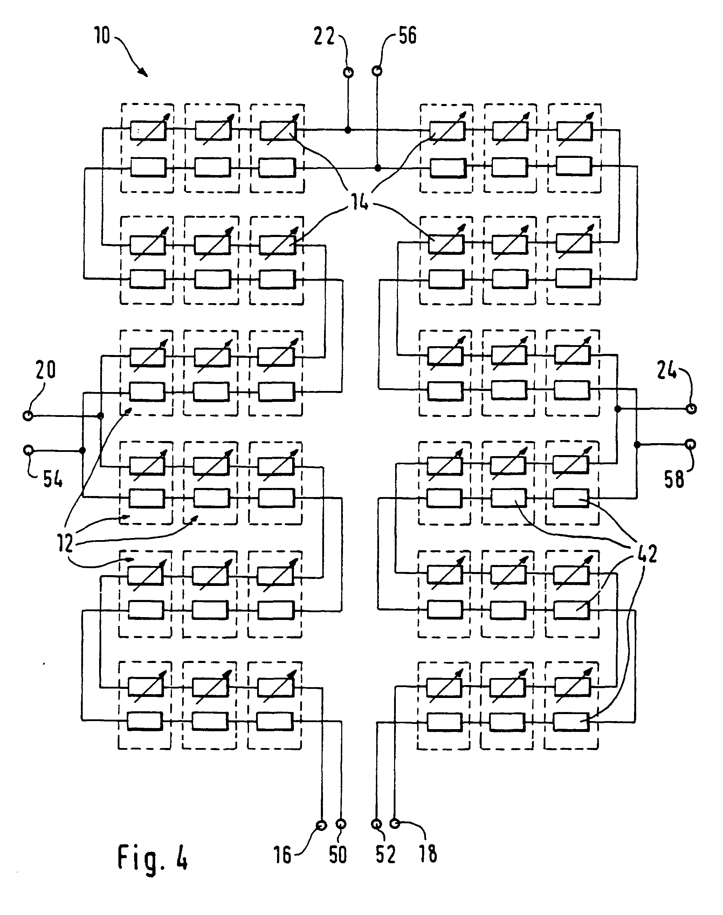

In Fig. 4 ist eine zweite Ausgestaltung eines Belegungssensors 10 dargestellt. Er umfaßt neben der Widerstandskette aus Schaltelementen 14 eine Kompensationsschaltung zur Kompensierung des Temperaturverhaltens der Schaltelemente 14. Die insbesondere im Winter sehr hohen Temperaturschwankungen im Inneren des Fahrzeugs verursachen im allgemeinen beträchtliche Änderungen des Widerstands der Widerstandsschicht 30 der Schaltelemente 14, während die temperaturbedingten Schwankungen des hochleitfähigen Auslöseelementes 32 eher vernachlässigbar sind. Dies bedeutet, daß vor allem das Temperaturverhalten der nicht belegten Schaltelemente 14 bei Temperaturschwankungen zu Verfälschungen der Meßergebnisse führen kann. Es ist folglich vorteilhaft, eine Kompensierung des Temperaturverhaltens der Widerstandsschichten 30 vorzusehen. Eine derartige Kompensationsschaltung erlaubt dann vorteilhaft auch eine Kompensation von alterungsbedingten Widerstandsveränderungen beziehungsweise von Produktionstoleranzen wie z.B. Toleranzen in der Schichtdicke der Widerstandsschicht 30.

Hierzu weist der Belegungssensor 10 eine Kompensationsschaltung auf, mit der eine Widerstandsreferenzmessung des Widerstandsmaterials durchgeführt wird. Im einfachsten Fall weist eine solche Kompensationsschaltung ein Referenzelement aus Widerstandsmaterial auf, dessen temperaturabhängiger Widerstand gesondert gemessen und von der Auswerteschaltung zum Normieren des an den jeweiligen Anschlüssen 16-24 gemessenen Gesamtwiderstandes des Widerstandskette verwendet wird.

In der in Fig. 4 dargestellten bevorzugten Ausgestaltung umfaßt die Kompensationsschaltung eine Vielzahl von Referenzelementen 42, von denen jeweils einer einem entsprechenden Schaltelement 14 derart benachbart zugeordnet ist, daß in jeden Sitzbereich des Fahrzeugsitzes jeweils ein Schaltelement 14 und ein Referenzelement 42 angeordnet ist. Durch die Anordnung der Referenzelemente 42 in unmittelbarer Nähe der zugeordneten Schaltelemente 14 ist dabei gewährleistet, daß die mechanischen und thermischen Beanspruchungen von Schaltelement 14 und zugeordnetem Referenzelement 42 nahezu identisch sind, so daß eine möglichst optimale Kompensation erfolgen kann. Da die Widerstandsschicht 48 des Referenzelementes 42 in unmittelbarer Nähe der Widerstandsschicht 30 des Schaltelement 14 gedruckt wird, kann überdies der Einfluß der variierenden Druckdicke der Schichten eliminiert werden.

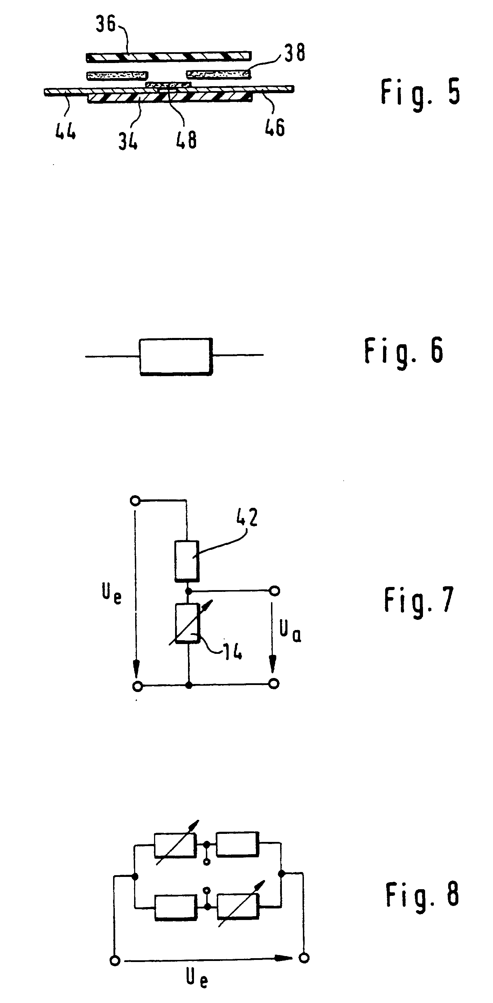

Die Referenzelemente sind bevorzugt, bis auf das Auslöseelement 32, von gleichem Aufbau wie die Schaltelemente 14 sind (siehe Fig. 5). Jedes Referenzelement umfaßt demnach zwei Kontaktelemente 44, 46, die auf der Trägerfolie 34 in einem gewissen Abstand zueinander angeordnet sind und die durch eine Schicht aus Widerstandsmaterial 48 elektrisch miteinander kontaktiert sind. Die Abmessungen der Kontaktelemente 44, 46 und der Widerstandsschicht 48 entsprechen dabei den Abmessungen der Kontaktelemente 26, 28 bzw. der Widerstandsschicht 30, so daß der elektrische Widerstand des Referenzelementes 42 dem elektrischen Widerstand des nicht-ausgelösten Schaltelementes 14 entspricht. Im Gegensatz zu den Schaltelementen 14, weisen die Referenzelemente 42 hingegen kein Auslöseelement 32 auf der zweiten Trägerfolie 36 auf, d.h. die Widerstandsschicht 48 kann nicht durch ein Auslöseelement 32 überbrückt werden. Die Referenzelemente 42 sind demgemäß als einfache Referenzwiderstände ausgebildet und werden durch das Schaltsymbol für einen Widerstand dargestellt (siehe Fig. 6). Es ist anzumerken, daß aufgrund des nicht vorhandenen Auslöseelementes 32 der Abstandhalter 38 im Bereich der Referenzelemente 42 nicht notwendigerweise eine Aussparung 40 aufweisen muß. Eine derartige Aussparung 40 ist jedoch bevorzugt vorgesehen, so daß ähnlich wie bei den Schaltelementen 14, ein belüfteter Hohlraum ausgebildet wird und die Widerstandsschicht 48 den gleichen Bedingungen wie die Widerstandsschicht 30 ausgesetzt ist.

Bei der Herstellung des Belegungssensors 10 werden die Kontaktelemente 26, 28 der Schaltelemente 14 und die Kontaktelemente 44, 46 des Referenzelemente 42 vorzugsweise in dem gleichen Arbeitsgang und aus dem gleichen Material auf die Trägerfolie 34 aufgedruckt. Ebenso werden die Widerstandsschichten 30 und 48 in einem Arbeitsgang aus dem gleichen Material hergestellt. Hierdurch ist gewährleistet, daß die Widerstandswerte der Schaltelemente 14 und der Referenzelemente 42 gleich sind und das gleiche Temperaturverhalten und Alterungsverhalten aufweisen.

Die einzelnen Referenzelemente 42 sind, wie die Schaltelemente 14, in Reihe geschaltet und bilden eine der Widerstandskette entsprechende Referenzwiderstandskette aus. Diese Referenzwiderstandskette weist vorzugsweise die gleiche Anzahl von Anschlüssen 50-58 auf wie die Widerstandskette, wobei die Referenzwiderstandskette in entsprechende Teilketten unterteilt wird. Die Temperatur- bzw. Alterungskompensation des Belegungssensors 10 kann folglich wie die Ermittlung der Auflagefläche zonenweise durchgeführt werden, so daß die Ermittlung der Verteilung der Auflagefläche entsprechend korrigiert werden kann.

In einer ersten Ausgestaltung wird die Kompensation des Temperatur- bzw. Alterungsverhaltens sequentiell durchgeführt, d.h. die Widerstandswerte der Widerstandskette und der Referenzkette werden zunächst nacheinander an den entsprechenden Anschlüssen gemessen. Anschließend werden die ermittelten Werte der Widerstandskette in der Auswerteschaltung auf die Referenzwerte normiert. In einer alternativen Ausgestaltung ist jede Widerstandskette mit der entsprechenden Referenzkette als Spannungsteiler verschaltet. Eine solche Verschaltung ist in Fig. 7 dargestellt, wobei jeweils nur ein Schaltelement 14 und ein Referenzelement 42 dargestellt ist. An den Eingang der Schaltung wird eine Eingangsspannung Uₑ angelegt und die resultierende Ausgangsspannung Uₐ an dem Verbindungspunkt zwischen der Widerstandskette und der Referenzkette gemessen. Die so ermittelte Ausgangsspannung gibt dann direkten Aufschluß über den kompensierten Widerstand der Widerstandskette. Eine anschließende Normierung des gemessenen Werte ist nicht mehr notwendig. Bei dieser Art der Kompensationsmessung werden zur Reduzierung der benötigten Anschlüsse vorteilhaft mehrere Spannungsteiler mit der gleichen Eingangsspannung Uₑ versorgt (siehe Fig. 8). Die Zahl der benötigten Anschlüsse für den Sensor ist folglich nur um zwei größer als die Zahl der Widerstandsketten/Referenzketten-Paare.

## Patentansprüche

1. Verfahren zum Erfassen verschiedener Parameter einer auf einer Unterlage sitzenden Person, **gekennzeichnet durch** die Schritte
Ermitteln der Ausdehnung der von der Person auf der Unterlage belegten Auflagefläche, und
Ermitteln der verschiedenen Parameter anhand der Ausdehnung der belegten Auflagefläche unter Berücksichtigung statistischer Korrelationsfunktionen zwischen der Ausdehnung der Auflagefläche und dem jeweiligen Parameter.

2. Verfahren nach Anspruch 1, **dadurch gekennzeichnet, daß** der ermittelte Parameter eine Gewichts- bzw. Größenklasse der Person umfaßt.

3. Verfahren nach Anspruch 1 oder 2, **dadurch gekennzeichnet, daß** zusätzlich zu der Ermittlung der Ausdehnung der belegten Auflagefläche die Position der belegten Auflagefläche bezüglich der Unterlage ermittelt wird, und daß aus der ermittelten Position zusätzlichdie Sitzposition der Person bezüglich der Unterlage ermittelt wird.

4. Verfahren nach Anspruch einem der vorhergehenden Ansprüche, **dadurch gekennzeichnet, daß** die Ermittlung der Ausdehnung der belegten Auflagefläche folgende Schritte umfaßt:
Unterteilen der Unterlage in eine Vielzahl von Sitzbereichen einer bestimmten Ausdehnung, und
Ermitteln der Zahl der von der Person belegten Sitzbereiche.

5. Verfahren nach Anspruch 4, **gekennzeichnet durch** die Schritte
Unterteilen der Unterlage in verschiedene Zonen, wobei jede Zone mehrere Sitzbereiche enthält,
gesondertes Ermitteln der Zahl der belegten Sitzbereiche für jede Zone der Unterlage,
Ermitteln der Sitzposition der Person auf der Unterlage anhand der Verteilung der belegten Sitzbereiche in den unterschiedlichen Zonen der Unterlage.

6. Vorrichtung zum Erfassen verschiedener Parameter einer auf einer Unterlage sitzenden Person, **gekennzeichnet durch** eine Vorrichtung zum Ermitteln der Ausdehnung der von der Person auf der Unterlage belegten Auflagefläche.

7. Vorrichtung nach Anspruch 6, **dadurch gekennzeichnet, daß** die Vorrichtung zum Ermitteln der Ausdehnung der belegten Auflagefläche zusätzlich eine Vorrichtung zum Ermitteln der Position der belegten Auflagefläche bezüglich der Unterlage umfaßt.

8. Vorrichtung nach einem der Ansprüche 6 bis 7, **dadurch gekennzeichnet, daß** die Vorrichtung zum Ermitteln der Ausdehnung der Auflagefläche einen der Unterlage zugeordneten Belegungssensor (10) umfaßt, und daß der Belegungssensor (10) eine Vielzahl von aktiven Bereichen (12) aufweist, die derart räumlich über die Unterlage verteilt sind, daß die Unterlage meßtechnisch in eine Vielzahl von Sitzbereichen einer bestimmten Größe unterteilt wird, wobei jedem Sitzbereich jeweils ein aktiver Bereich (12) des Belegungssensors (10) zugeordnet ist.

9. Vorrichtung nach Anspruch 8, **dadurch gekennzeichnet, daß** der Belegungssensor (10) in verschiedene Zonen unterteilt ist, wobei jede Zone mehrere aktive Bereiche (12) des Belegungssensors (10) enthält, und daß die aktiven Bereiche (12) der verschiedenen Zonen des Belegungssensors (10) gesondert auswertbar sind.

10. Vorrichtung nach einem der Ansprüche 8 bis 9, **dadurch gekennzeichnet, daß** der Belegungssensor (10) eine Vielzahl von Schaltelementen (14) aufweist, wobei jedes Schaltelement (14) einen aktiven Bereich (12) des Belegungssensors (10) ausbildet, und daß jedes Schaltelement (14) einen ersten Widerstandswert aufweist, wenn der dem entsprechenden aktiven Bereich (12) zugeordnete Sitzbereich nicht belegt ist, und einen zweiten Widerstandswert aufweist, wenn der entsprechende Sitzbereich belegt ist, wobei der erste Widerstandswert wesentlich größer ist als der zweite Widerstandswert.

11. Vorrichtung nach Anspruch 10, **dadurch gekennzeichnet, daß** jedes Schaltelement (14) ein Widerstandselement (30) mit einem endlichen elektrischen Widerstand und ein niederohmiges Auslöseelement (32) umfaßt, wobei das Auslöseelement (32) dem Widerstandselement (30) bei betätigtem Schaltelement (14) parallelgeschaltet wird, so daß der Gesamtwiderstand des Schaltelementes (12) wesentlich erniedrigt wird.

12. Vorrichtung nach Anspruch 10, **dadurch gekennzeichnet, daß** jedes Schaltelement (14) ein erstes Kontaktelement (26) und ein zweites Kontaktelement (28) umfaßt, die in einem gewissen Abstand zueinander angeordnet sind und durch eine Schicht (30) aus Widerstandsmaterial elektrisch miteinander kontaktiert sind, und ein niederohmiges Auslöseelement (32), das bei nicht betätigtem Schaltelement (14) in einem gewissen Abstand zu den Kontaktelementen (26, 28) angeordnet ist und das die beiden Kontaktelemente (26, 28) beim Betätigen des Schaltelementes (14) elektrisch kontaktiert, wobei die elektrische Leitfähigkeit der Kontaktierung durch die Widerstandsschicht (30) wesentlich kleiner ist als die Leitfähigkeit der Kontaktierung durch das Auslöseelement (30).

13. Vorrichtung nach einem der Ansprüche 10 bis 12, **dadurch gekennzeichnet, daß** die Schaltelemente (14) in Serie geschaltet sind, so daß sie eine Widerstandskette ausbilden, wobei der Gesamtwiderstand der Widerstandskette ein Maß für die Zahl der belegten Sitzbereiche darstellt.

14. Vorrichtung nach einem der Ansprüche 10 bis 13, **gekennzeichnet durch** eine Kompensationsschaltung zum Kompensieren von Temperaturverhalten und/oder Alterungsverhalten und/oder von Produktionstoleranzen der Schaltelemente (14).

15. Vorrichtung nach Anspruch 14, **dadurch gekennzeichnet, daß** die Kompensationsschaltung eine Vielzahl von Referenzelementen (42) umfaßt, wobei jedem Schaltelement (14) jeweils ein Referenzelement (42) zugeordnet ist, dessen elektrischer Widerstand dem ersten Widerstandswert des Schaltelementes (14) entspricht.

16. Vorrichtung nach Anspruch 15, **dadurch gekennzeichnet, daß** der Widerstand der Schaltelemente (14) auf den Widerstand der entsprechenden Referenzelemente (42) normiert wird.

17. Verwendung einer Vorrichtung zum Erkennen verschiedener Parameter einer auf einer Unterlage sitzenden Person nach einem der Ansprüche 6 bis 16 zur Steuerung eines Passagierrückhaltesystems in einem Fahrzeug.

18. Fahrzeugsitz mit einer Vorrichtung nach einem der Ansprüche 6 bis 16.

## Claims

1. A method for detecting various parameters of a person sitting on a support, **characterized by** the steps:
determination of the extension of the contact surface occupied by the person on the support, and
determination of the various parameters with the help of the extension of the occupied contact surface by taking into account statistical correlation functions between the extension of the contact surface and the respective parameter.

2. The method according to claim 1, **characterized in that** the determined parameter comprises a weight or size class of the person.

3. The method according to claim 1 or 2, **characterized in that**, in addition to the determination of the extension of the occupied contact surface, the position of the occupied contact surface with respect to the support is determined and **in that** from the determined position, the sitting position of the person relatively to the support is further determined.

4. The method according to any of the preceding claims, **characterized in that** the determination of the extension of the occupied contact surface comprises the following steps:
division of the support into a plurality of sitting areas of a certain extension, and
determination of the number of sitting areas occupied by the person.

5. The method according to claim 4, **characterized by** the steps:
division of the support into various zones, wherein each zone contains several sitting areas,
separate determination of the number of occupied sitting areas for each zone of the support,
determination of the position of the person on the support with the help of the distribution of the occupied sitting areas in the various zones of the support.

6. A device for detecting various parameters of a person sitting on a support, **characterized by** a device for determining the extension of the contact surface occupied by the person on the support.

7. The device according to claim 6, **characterized in that** the device for determining the extension of the occupied contact surface further comprises a device for determining the position of the occupied contact surface relatively to the support.

8. The device according to any of claims 6 to 7, **characterized in that** the device for determining the extension of the contact surface comprises an occupancy sensor (10) associated with the support and **in that** the occupancy sensor (10) has a plurality of active areas (12), which are distributed over the support so that the support is metrologically divided into a plurality of sitting areas of a certain size, wherein each seat area is respectively associated with an active area (12) of the occupancy sensor (10).

9. The device according to claim 8, **characterized in that** the occupancy sensor (10) is divided into various zones, wherein each zone contains several active areas (12) of the occupancy sensor (10) and **in that** the active areas (12) of the various zones of the occupancy sensor (10) may be evaluated separately.

10. The device according to any of claims 8 to 9, **characterized in that** the occupancy sensor (10) has a plurality of switching components (14) wherein each switching component (14) forms an active area (12) of the occupancy sensor (10), and **in that** each switching component (14) has a first resistance value when the seat area associated with the corresponding active area (12) is unoccupied and a second resistance value when the corresponding seat area is occupied, wherein the first resistance value is substantially larger than the second resistance value.

11. The device according to claim 10, **characterized in that** each switching component (14) comprises a resistive component (30) with a finite electrical resistance and a low-resistance triggering component (32), wherein the triggering component (32) is mounted in parallel to the resistive component (30) when the switching component (14)is actuated, so that the total resistance of the switching component (12) is lowered substantially.

12. The device according to claim 10, **characterized in that** each switching component (14) comprises a first contact component (26) and a second contact component (28), which are positioned at a certain distance from each other and are brought into electrical contact with each other by a layer (30) of resistive material, and a low-resistance triggering component (32) which is positioned at a certain distance from the contact components (26, 28) when the switching component (14) is non-actuated and which brings both contact components (26, 28) into electrical contact upon actuation of the triggering component (14), wherein the electrical conductivity of the contact by the resistive layer (30) is substantially less than the conductivity of the contact by the triggering component (30).

13. The device according to any of claims 10 to 12, **characterized in that** the switching components (14) are mounted in series so as to form a resistance chain, wherein the total resistance of the resistance chain represents a measure for the number of occupied sitting areas.

14. The device according to any of claims 10 to 13, **characterized by** a compensation circuit for compensating the temperature behavior and/or aging behavior and/or production tolerances of the switching components (14).

15. The device according to claim 14, **characterized in that** the compensation circuit comprises a plurality of reference components (42) wherein each switching component (14) is associated with a reference component (42) respectively, the electrical resistance of which corresponds to the first resistance value of the switching component (14).

16. The device according to claim 15, **characterized in that** the resistance of the switching components (14) is normalized on the resistance of the corresponding reference components (42).

17. The use of a device for detecting various parameters of a person sitting on a support according to any of claims 6 to 16 for controlling a passenger restraint system in a vehicle.

18. A vehicle seat with a device according to any of claims 6 to 16.

## Revendications

1. Procédé pour détecter différents paramètres d'une personne assise sur un support, **caractérisé par** les étapes suivantes :
la détermination de l'étendue de la surface de contact occupée par la personne sur le support, et
la détermination des différents paramètres à l'aide de l'étendue de la surface de contact occupée en prenant en compte des fonctions de corrélation statistiques entre l'étendue de la surface de contact et le paramètre respectif.

2. Procédé selon la revendication 1, **caractérisé en ce que** le paramètre déterminé constitue une classe de poids ou de tailles de la personne.

3. Procédé selon la revendication 1 ou 2, **caractérisé en ce que**, en plus de la détermination de l'étendue de la surface de contact occupée, la position de la surface de contact occupée par rapport au support est déterminée et **en ce que**, d'après la position déterminée, la position assise de la personne par rapport au support est encore déterminée.

4. Procédé selon l'une quelconque des revendications précédentes, **caractérisé en ce que** la détermination de l'étendue de la surface de contact occupée comprend les étapes suivantes :
la subdivision du support en une pluralité de régions de support d'une certaine étendue, et
la détermination du nombre de régions de support occupées par la personne.

5. Procédé selon la revendication 4, **caractérisé par** les étapes suivantes :
la subdivision du support en différentes zones, chaque zone contenant plusieurs régions de support,
la détermination séparée du nombre de régions de support occupées pour chaque zone du support,
la détermination de la position de la personne sur le support à l'aide de la distribution des régions de support occupées dans les différentes zones du support.

6. Dispositif pour détecter différents paramètres d'une personne assise sur un support **caractérisé par** un dispositif pour déterminer l'étendue de la surface de contact occupée par la personne sur le support.

7. Dispositif selon la revendication 6, **caractérisé en ce que** le dispositif pour déterminer l'étendue de la surface de contact occupée comprend en outre un dispositif pour déterminer la position de la surface de contact occupée par rapport au support.

8. Dispositif selon l'une quelconque des revendications 6 à 7, **caractérisé en ce que** le dispositif pour déterminer l'étendue de la surface de contact comprend un capteur d'occupation (10) associé au support, et **en ce que** le capteur d'occupation (10) présente une pluralité de régions actives (12), qui sont distribuées de telle manière sur le support qu'elles subdivisent de façon métrologique le support en une pluralité de régions de support d'une certaine taille, chaque région de siège étant associée respectivement à une région active (12) du capteur d'occupation (10).

9. Dispositif selon la revendication 8, **caractérisé en ce que** le capteur d'occupation (10) est divisé en différentes zones, chaque zone contenant plusieurs régions actives (12) du capteur d'occupation (10), et **en ce que** les régions actives (12) des différentes zones du capteur d'occupation (10) peuvent être évaluées séparément.

10. Dispositif selon l'une quelconque des revendications 8 à 9, **caractérisé en ce que** le capteur d'occupation (10) présente une pluralité d'éléments de commutation (14), chaque élément de commutation (14) formant une région active (12) du capteur d'occupation (10), et **en ce que** chaque élément de commutation (14) présente une première valeur de résistance, lorsque la région de siège associée à la région active respective (12) est inoccupée et une deuxième valeur de résistance lorsque la région de siège respective est occupée, la première valeur de résistance étant sensiblement supérieure à la deuxième valeur de résistance.

11. Dispositif selon la revendication 10, **caractérisé en ce que** chaque élément de commutation (14) comprend un élément résistif (30) ayant une résistance électrique finie et un élément de commutation à faible résistance (32), l'élément de commutation (32) étant monté en parallèle sur l'élément résistif (30) lorsqu'un élément de commutation (14) est actionné, de sorte à abaisser sensiblement la résistance totale de l'élément de commutation (12).

12. Dispositif selon la revendication 10, **caractérisé en ce que** chaque élément de commutation (14) comprend un premier élément de contact (26) et un deuxième élément de contact (28) qui sont disposés à une certaine distance l'un de l'autre et sont amenés en contact électrique l'un avec l'autre par une couche (30) de matière résistive, et un élément de commutation à faible résistance (32) qui est disposé à une certaine distance des éléments de contact (26, 28) lorsque l'élément de commutation (14) n'est pas actionné et qui amène les deux éléments de contact (26, 28) en contact électrique lors de l'actionnement de l'élément de commutation (14), la conductivité électrique du contact par la couche résistive (30) est sensiblement inférieure à la conductivité du contact par l'élément de commutation (30).

13. Dispositif selon l'une quelconque des revendications 10 à 12, **caractérisé en ce que** les éléments de commutation (14) sont montés en série de sorte à former une chaîne de résistances, la résistance totale de la chaîne de résistances représentant une mesure du nombre de régions de support occupées.

14. Dispositif selon l'une quelconque des revendications 10 à 13, **caractérisé par** un circuit de compensation pour compenser le comportement en température et/ou le comportement en vieillissement et/ou les tolérances à la production des éléments de commutation (14).

15. Dispositif selon la revendication 14, **caractérisé en ce que** le circuit de compensation comprend une pluralité d'éléments de référence (42), dans lequel chaque élément de commutation (14) est associé respectivement à un élément de référence (42), dont la résistance électrique correspond à la première valeur de résistance de l'élément de commutation (14).

16. Dispositif selon la revendication 15, **caractérisé en ce que** la résistance des éléments de commutation (14) est normalisée sur la résistance des éléments de référence correspondants (42).

17. Utilisation d'un dispositif pour détecter différents paramètres d'une personne assise sur un support selon l'une quelconque des revendications 6 à 16 en vue de commander un système de retenue des passagers dans un véhicule.

18. Siège de véhicule avec un dispositif selon l'une quelconque des revendications 6 à 16.
